**Europäisches Patentamt**

**European Patent Office**

**Office européen des brevets**

(19)

(11) Numéro de publication: **0 1 1 2 772**
**B1**

(12) ## FASCICULE DE BREVET EUROPEEN

(45) Date de publication du fascicule du brevet:
**01.04.87**

(21) Numéro de dépôt: **83402467.1**

(22) Date de dépôt: **19.12.83**

(51) Int. Cl.⁴: **G 01 D 5/14,** G 01 D 5/20,
G 21 C 17/12

(54) **Dispositif pour mesurer la position d'un organe mobile par rapport à un organe fixe.**

(30) Priorité: **23.12.82 FR 8221666**

(43) Date de publication de la demande:
**04.07.84 Bulletin 84/27**

(45) Mention de la délivrance du brevet:
**01.04.87 Bulletin 87/14**

(84) Etats contractants désignés:
**BE DE FR GB IT NL SE**

(56) Documents cités:
**CH - B - 373 987**
**DE - B - 1 213 310**
**FR - A - 1 500 121**
**FR - A - 2 350 578**
**FR - A - 2 364 432**
**GB - A - 2 078 375**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris**
**(FR)**

(72) Inventeur: **Boimond, Guy, Résidence "Les Javis" Route**
**de la Calade, F-13540 Puyricard (FR)**

(74) Mandataire: **Mongrédien, André et al, c/o**
**BREVATOME 25, rue de Ponthieu, F-75008 Paris (FR)**

ACTORUM AG

## Description

Le présente invention se rapporte à un dispositif permettant de mesurer la position d'un organe mobile tel qu'une tige par rapport à un organe fixe tel qu'une enceinte cylindrique dans laquelle se déplace la tige.

Un tel dispositif s'applique notamment à la mesure de la position des barres de contrôle absorbantes qui permettent de contrôler la réactivité dans le cœur des réacteurs nucléaires, quel que soit le type de ces réacteurs (à eau sous pression, à eau bouillante ou à neutrons rapides). Toutefois, l'invention n'est pas limitée à cette application et peut s'appliquer à tous les cas où il est nécessaire de connaître avec une bonne précision la position d'un organe mobile dans une direction donnée, même dans un environnement hostile et sans que l'encombrement du dispositif soit trop important. Le document FR-A 2 350 578 décrit un dispositif correspondant à celui défini dans le préambule de la revendication 1.

Dans l'état actuel de la technique, la détection du déplacement des barres de contrôle dans le cœur des réacteurs à eau sous pression de 900 MW est réalisée au moyen d'un transformateur différentiel. Toutefois, ce type de détecteur a une résolution très réduite ($\frac{1}{30}$ de la course totale des barres, soit 123 mm pour une course de 3700 mm). De plus, il ne peut être monté plus d'un détecteur par mécanisme.

Ces limitations, qui n'étaient pas fondamentalement gênantes pour ce type de réacteur, le deviennent dans le cadre de certains projets de réacteurs nucléaires, dans lesquels l'optimisation des conditions d'exploitation conduit à un contrôle précis de la position des barres absorbantes dans le cœur et confère à cette mesure des conditions de sûreté impliquant des mesures redondantes sur chacun des mécanismes de contrôle.

Dans cet esprit, l'invention a précisément pour objet un dispositif de mesure de position présentant une bonne précision, autorisant si nécessaire une mesure redondante et permettant d'effectuer une mesure absolue de la position, c'est-à-dire ne devant pas faire appel à un état antérieur du dispositif.

A cet effet et conformément à l'invention, il est proposé un dispositif pour mesurer la position d'un organe mobile selon une direction donnée par rapport à un organe fixe comprenant un repère générateur de flux magnétique porté par l'organe mobile et au moins une rangée de capteurs changeant d'état sous l'effet dudit flux magnétique, ces capteurs étant disposés à intervalles réguliers sur l'organe fixe selon ladite direction, de telle sorte qu'au moins un capteur change d'état sous l'effet du flux magnétique, caractérisé en ce que les capteurs d'une même rangée sont groupés électriquement selon une matrice de n lignes et p colonnes dont les n lignes sont alimentées à tour de rôle par des moyens d'alimentation et dont les p colonnes sont traitées à tour de rôle par des moyens de lecture.

Conformément à un mode de réalisation préféré de l'invention, les moyens d'alimentation comprennent n transformateurs comportant chacun un enroulement primaire apte a être raccordé à une source de courant alternatif d'alimentation et un enroulement secondaire connecté en série aux capteurs d'une même ligne.

De préférence, chacun des n transformateurs comprend de plus un enroulement de commande, les n transformateurs étant groupés électriquement selon une matrice de a lignes et b colonnes et les enroulements primaires et les enroulements de commande étant respectivement connectés en série ligne par ligne et colonne par colonne et pouvant être raccordés respectivement à ladite source de courant alternatif d'alimentation et à une source de courant continu de saturation.

Dans ce cas, les moyens d'alimentation peuvent comprendre de plus a lignes d'alimentation, chacune de ces lignes d'alimentation étant connectée à une ligne d'enroulements primaires Ep au travers d'un condensateur et à une colonne d'enroulements de commande Ec au travers d'une diode.

Dans ce mode de réalisation préféré de l'invention, les moyens de lecture comprennent $\frac{p}{2}$ transformateurs comportant chacun au moins deux enroulements primaires en opposition de phase connectés respectivement à deux capteurs non consécutifs d'une même ligne, et un enroulement secondaire apte à être raccordé à un circuit de mesure.

De préférence, chacun des $\frac{p}{2}$ transformateurs comprend de plus un enroulement de commande, les $\frac{p}{2}$ transformateurs étant groupés électriquement selon une matrice de k lignes et l colonnes, les enroulements secondaires d'une même ligne étant connectés en série et pouvant être raccordés à un circuit de mesure, et les enroulements de commande d'une même colonne étant connectés en série et pouvant être raccordés à une source de courant continu de saturation.

Dans ce cas, les moyens de lecture peuvent comprendre de plus k lignes de mesure, chacune de ces lignes de mesure étant connectée à une ligne d'enroulements secondaires au travers d'un condensateur et à une colonne d'enroulements de commande au travers d'une diode.

Selon une première variante de réalisation de l'invention, les capteurs magnétiques sont des capteurs magnétomètres comprenant un tore magnétique à cycle d'hystérésis rectangulaire et deux enroulements bobinés sur ce tore et constituant respectivement des éléments d'excitation et de lecture, les éléments d'excitation des capteurs d'une même ligne étant connectés en série et les éléments de lecture des capteurs d'une même colonne étant connectés en parallèle.

Dans ce cas, les capteurs magnétomètres sont de préférence fixés sur un support amagnétique et séparés par des shunts magnétiques, les capteurs, le support et les shunts étant logés dans un tube amagnétique disposé de l'autre côté de l'organe fixe par rapport à l'organe mobile.

Selon une deuxième variante de réalisation de l'invention, les capteurs sont des interrupteurs à lame les interrupteurs d'une même ligne étant connectés en série, chacun des $\frac{p}{2}$ transformateurs comprenant 2 n enroulements primaires, chaque interrupteur de deux colonnes non consécutives étant monté en parallèle sur un enroulement primaire différent de l'un des $\frac{p}{2}$ transformateurs, de telle sorte que les enroulements primaires connectés à deux interrupteurs d'une même ligne soient en opposition de phase.

Dans ce cas, les interrupteurs à lame sont connectés électriquement par des conducteurs en matériau magnétique et fixés sur un support par l'intermédiaire de plots de raccordement électriquement isolants, les interrupteurs, les conducteurs, le support et les plots étant logés dans un tube amagnétique disposé de l'autre côté de l'organe fixe par rapport à l'organe mobile.

Selon un autre aspect de l'invention, plusieurs rangées de capteurs sont disposées sur l'organe fixe autour de l'organe mobile, les capteurs de chaque rangée étant disposés au même niveau de façon à donner une mesure redondante de la position de la tige.

Selon encore un autre aspect de l'invention, l'organe mobile se déplace selon un pas incrémental donné et la distance entre deux capteurs magnétomètres consécutifs d'une même rangée est égale à deux fois ledit pas.

On décrira maintenant, à titre d'exemple non limitatif, deux variantes de réalisation préférées de l'invention en se référant aux dessins annexés, dans lesquels:

la fig. 1a représente un capteur magnétomètre placé dans un champ magnétique uniforme HC et la figure 1b est une courbe illustrant les variations du courant de crète Is délivré par ce capteur en fonction du champ HC;

la fig. 2a est une vue en coupe longitudinale d'une tige de commande de barre absorbante et de sa gaine de guidage illustrant l'implantation conformément à une première variante de réalisation de l'invention d'un dispositif de mesure de position de la tige comportant plusieurs capteurs magnétomètres, et la figure 2b est une vue en coupe transversale selon la ligne IIb de la figure 2a;

la fig. 3 est un schéma représentant le circuit d'interconnexions électriques des capteurs magnétomètres du dispositif de la figure 2 et les circuits d'excitation et de lecture de ces capteurs;

la fig. 4 est un schéma représentant plus en détails le circuit d'excitation des capteurs;

la fig. 5 est un schéma représentant plus en détails le circuit de lecture des capteurs;

la fig. 6 représente le synoptique général du circuit de commande de l'ensemble du dispositif de mesure;

la fig. 7 est une vue en perspective montrant une deuxième variante de réalisation de l'invention utilisant comme détecteurs des interrupteurs à lames souples;

la fig. 8 est un schéma comparable à la figure 3 montrant le circuit d'interconnexions électriques des interrupteurs de la figure 7;

la fig. 9 représente plus en détails la connexion de l'un des transformateurs du circuit de lecture avec les interrupteurs à lame, et

la fig. 10 représente plus en détails le circuit de lecture des capteurs dans la variante des figures 7 à 9.

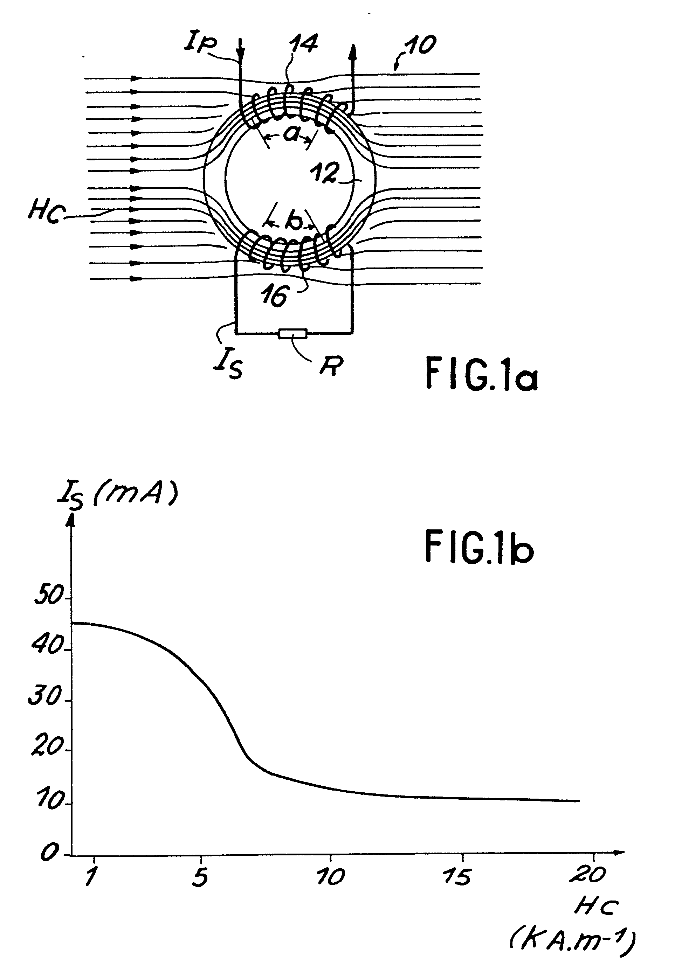

Afin de faciliter la compréhension de la première variante de réalisation décrite, qui utilise de préférence des capteurs du type magnétomètres, on rappelle tout d'abord le principe de fonctionnement de ces capteurs en se référant aux figures 1a et 1b. Toutefois, pour plus de détails, il est fait référence à la demande de brevet français FR-A 2 425 648 déposée au nom du Commissariat à l'Energie Atomique et qui concerne un tel détecteur de champ magnétique. On notera par ailleurs que d'autres types de capteurs tels que des sondes à effet Hall peuvent être utilisés à la place des magnétomètres sans sortir du cadre de l'invention.

On voit sur la figure 1a qu'un capteur magnétomètre 10 se présente sous la forme d'un circuit magnétique 12 en forme de tore réalisé au moyen d'un ruban de matériau magnétique à cycle d'hystérésis rectangulaire. Dans l'application envisagée ici, ce circuit 12 constitue le noyau d'un transformateur de courant et à cet effet un enroulement primaire d'excitation 14 et un enroulement secondaire de lecture 16 sont bobinés sur ce noyau.

Considérons maintenant ce tore placé dans un champ magnétique uniforme HC perpendiculaire à l'axe du tore. Ce champ provoque une circulation de flux dans le tore de même direction que le champ et une induction maximale dans les secteurs du tore repérés a et b sur la figure 1.

Si l'on injecte un courant alternatif Ip dans l'enroulement primaire 14, celui-ci tend à faire circuler un flux qui s'ajoute à tout instant à celui créé par le champ Hc dans l'un des secteurs a ou b et se retranche dans l'autre. Quelle que soit l'alternance considérée du champ $H_A$ créé par l'enroulement 14, il existe donc toujours au moins un secteur du tore dans lequel les deux champs $H_A$ et $H_C$ s'ajoutent.

Dans ce secteur, la variation utile d'induction est égale à:

$$\Delta B = B_s - (\mu_o \cdot \mu_r \cdot H_C)$$

avec $B_S$ = induction à saturation du matériau magnétique

$\mu_o$ = perméabilité de l'air $(4\pi \, 10^{-7})$

$\mu_r$ = perméabilité du matériau magnétique

$H_c$ = champ continu externe.

Lorsque $H_c = \dfrac{B_S}{\mu_o \cdot \mu_r}$,

le matériau magnétique est saturé et $\mu_r$ est très

proche de 1, de telle sorte que la variation d'induction provoquée par $H_A$ devient très faible, car limitée par la perméabilité de l'air $\mu_o$.

Si l'on considère maintenant l'ensemble du tore, tout ce passe comme si celui-ci était coupé par un entrefer correspondant au secteur saturé et, si l'on néglige le flux de fuite dans l'air, les variations d'induction qui y règnent sont égales à celles existant dans ce secteur.

La courbe de la figure 1b donne l'amplitude du courant secondaire de crête $I_S$ en fonction du champ externe $H_C$, le courant primaire étant maintenu constant à 100 mA crête 10 KHz. On voit grâce à cette courbe que le magnétomètre 10 peut être utilisé avantageusement comme capteur pour détecter la présence d'un champ magnétique uniforme $H_C$ en mesurant le courant secondaire $I_S$.

Les capteurs magnétomètres présentent de nombreux avantages, notamment pour l'application à la détection du déplacement des tiges portant les barres de contrôle dans les réacteurs nucléaires. Parmi ces avantages, on remarquera notamment:

– Un encombrement très faible (par exemple, diamètre extérieur de 5,3 mm pour une hauteur voisine de 2 mm).

– Un bon comportement en température jusqu'à 350°C si l'isolation du fil de bobinage est appropriée.

– Une sensibilité à la valeur absolue du champ magnétique et non à sa dérivée.

– Une insensibilité quasi totale au champ orienté parallèlement à l'axe du tore (effet directif intéressant pour certaines applications).

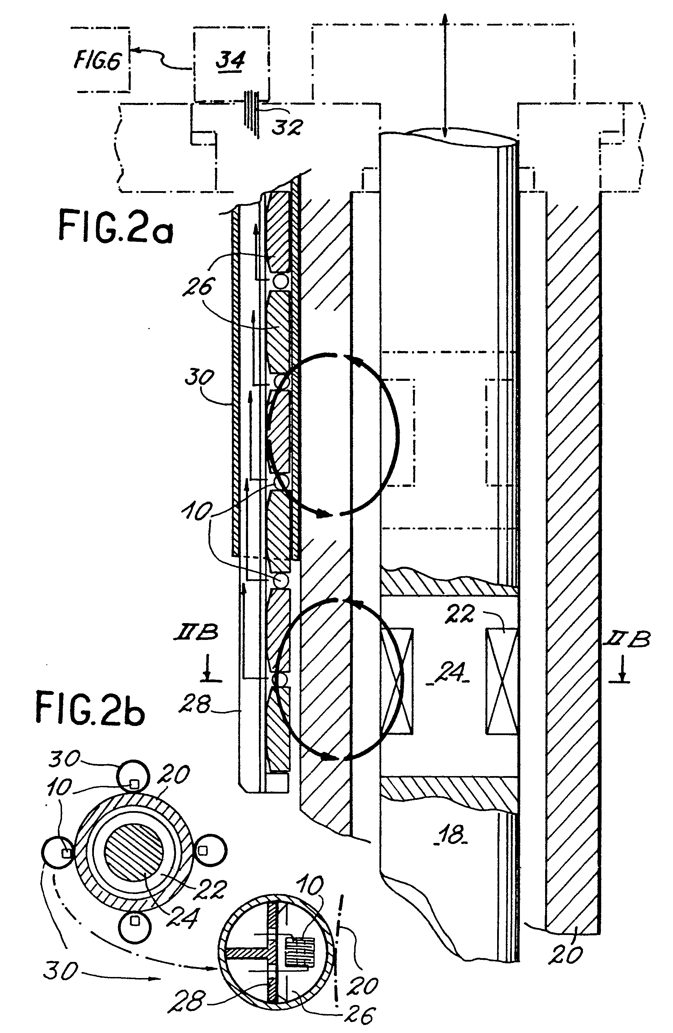

On a représenté sur les figures 2a et 2b l'utilisation de tels capteurs magnétomètres à la mesure de la position d'une tige 18 à l'intérieur d'une enceinte cylindrique amagnétique 20.

Le principe de base de l'invention consiste à munir la tige 18 d'un index magnétique, constitué d'un aimant permanent annulaire 22, dont la position est détectée par des magnétomètres 10 disposés sur une génératrice de l'enceinte cylindrique 20.

De façon plus précise, l'aimant annulaire 22 est monté sur un support intercalaire 24 fixé lui-même sur la tige 18.

Dans le cas où la tige de commande est elle-même génératrice de flux magnétique (utilisation de bobines de commande et tige en acier ferromagnétique) l'aimant permanent n'est pas absolument nécessaire. Afin de réaliser des mesures ayant un caractère absolu, et plus précisément ne devant pas faire appel à la mémoire d'un état antérieur du système, on dispose les magnétomètres 10, de telle sorte qu'en tous points de la course utile de la tige 18, on ait toujours au moins un magnétomètre excité par l'index magnétique 22, ce qui implique, comme on l'a représenté en traits discontinus sur la figure 2a, que deux capteurs voisins puissent être excités simultanément par l'aimant. Bien entendu, les dimensions de l'aimant doivent être adaptées en conséquence (longueur voisine de l'intervalle séparant deux capteurs consécutifs). De plus, afin d'assurer la continuité du flux entre deux capteurs voisins, l'intervalle séparant les capteurs est magnétiquement shunté par des pièces 26 en acier doux.

Dans l'application de l'invention à la mesure du déplacement des tiges portant les barres absorbantes dans un réacteur nucléaire, ces tiges 18 se déplacent selon un pas incrémental donné. L'intervalle entre deux magnétomètres 10 peut alors être défini de façon à obtenir une résolution de la mesure égale à ce pas incrémental caractérisant le déplacement de la tige de commande d'un absorbant. La possibilité d'exciter simultanément deux capteurs magnétomètres consécutifs est mise à profit pour détecter la position intermédiaire entre ces deux capteurs, qui peuvent ainsi être distants de deux pas. Le pas incrémental caractérisant le déplacement de la tige étant par exemple de 16 mm et la course totale d'un absorbant étant par exemple de 259 pas, la distance entre deux magnétomètres consécutifs est alors de 32 mm et chaque rangée de capteurs disposée selon une génératrice de l'enceinte cylindrique 20 comprend 128 capteurs magnétomètres.

On a vu que l'application au domaine des réacteurs nucléaires implique des règles de sûreté particulièrement sévères. A cet effet, il est alors souhaitable d'effectuer des mesures redondantes, par exemple d'ordre 4 comme on l'a représenté sur la figure 2b, de la position de la tige mobile 18 dans l'enceinte fixe 20. De façon plus précise, on dispose alors 4 rangées de capteurs 10 selon quatre génératrices de l'enceinte 20 décalées de 90° les unes par rapport aux autres, les capteurs des différentes rangées étant disposés aux mêmes niveaux de long de l'enceinte, de façon à assurer la redondance de la mesure.

Comme l'illustrent les figures 2a et 2b, les capteurs magnétomètres 10 d'une même rangée et les shunts magnétiques 26 qui leur sont associés sont fixés sur un support amagnétique 28 présentant par exemple un profil en forme de T, et l'ensemble est enfilé dans un tube guide amagnétique 30, réalisé par exemple en acier inoxydable, qui est disposé à l'extérieur de l'enceinte 20, parallèlement à une génératrice de celle-ci. Compte tenu des dimensions des capteurs 10 données précédemment à titre d'exemple, le diamètre du tube guide est par exemple d'environ 20 mm.

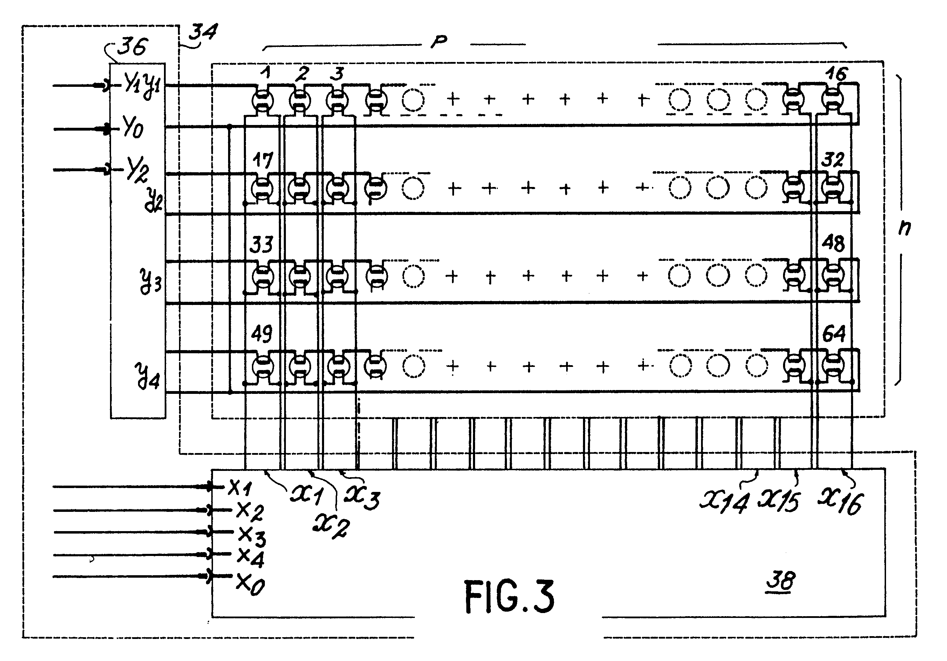

Le câblage des capteurs magnétomètres 10 est réalisé au moyen de fils 32 qui cheminent à l'intérieur des tubes 30 et dont toutes les extrémités sont ramenées dans un boîtier d'interconnexions 34 situé à l'extrémité supérieure des tubes guides. Les connexions relatives aux enroulements secondaires 16 des capteurs magnétomètres sont organisées de telle sorte que l'impédance de charge R (voir figure 1) soit identique quelle que soit la position du capteur dans le détecteur. La même procédure est appliquée aux enroulements primaires 14, mais par groupes de p capteurs, comme on le comprendra ultérieurement en se référant à la figure 3. Pour cela, l'une des extrémités de l'enroulement primaire remonte au boîtier d'interconnexion 34 par la voie la plus directe, de telle sorte que les enroulements primaires 14 d'un même groupe de p capteurs 10 soient montés en série, alors que l'autre extrémité de l'enroulement primaire passe par l'extrémité basse de l'enceinte cylindrique 20 avant de remonter dans le tube guide 30 jusqu'au boîtier 34.

Le circuit d'interconnexions des fils 32 à l'intérieur du boîtier 34 est représenté schématiquement sur la figure 3. Pour faciliter la compréhension, on a représenté sur cette figure les différentes connexions entre les fils 32 au niveau des capteurs 10, alors que ces connexions sont situées en réalité dans le boîtier d'interconnexions 34, à l'extrémité supérieure des tubes guides.

Bien entendu, un circuit d'interconnexions tel que celui qui est représenté sur la figure 3 est associé à chacune des rangées de capteurs.

Sur la figure 3, on a représenté le cas où chaque rangée de capteurs comprend 64 capteurs numérotés de 1 à 64. Toutefois, le nombre de capteurs d'une même rangée pourrait être différent sans sortir du cadre de l'invention.

Conformément à l'invention, le circuit d'interconnexions relie les capteurs d'une même rangée pour définir du point de vue électrique une matrice rectangulaire de capteurs à n lignes et p colonnes telle que représentée schématiquement sur la figure 3. De façon plus précise, les p premiers capteurs de la rangée constituent la première ligne de la matrice, les p capteurs suivants constituant la deuxième ligne, et ainsi de suite. De préférence, le nombre n de lignes est inférieur au nombre p de colonnes, les nombres n et p étant bien entendu choisis de telle sorte que le produit n·p soit égal au nombre de capteurs d'une même rangée.

Dans l'exemple représenté sur la figure 3 où chaque rangée comprend 64 capteurs, on voit que la matrice de capteurs comprend quatre lignes et seize colonnes.

Comme l'illustre la figure 3, le circuit d'interconnexions des capteurs est tel que les enroulements primaires d'excitation 14 d'une même ligne de la matrice de capteurs sont connectés en série et que les enroulements secondaires de lecture 16 d'une même colonne de la matrice sont connectés en parallèle.

Grâce à cette interconnexion des capteurs sous une forme matricielle, on injecte simultanément à tous les enroulements d'excitation d'une même ligne le courant d'excitation $I_p$ (figure 1) et on analyse l'état des capteurs en mesurant le courant secondaire $I_s$ colonne par colonne. Cette opération se répète en excitant l'une après l'autre toutes les lignes, de façon à localiser le ou les capteurs excités par la présence de l'index magnétique 22.

Ce repérage est effectué en tenant compte du fait que le courant secondaire $I_S$ est minimum lorsque le capteur est saturé par la présence de l'index magnétique et maximum lorsqu'il n'est pas saturé.

La mise en parallèle dans une colonne de n enroulements secondaires 16 nécessite quelques précautions car les capteurs non excités des n-l autres lignes consomment un courant magnétisant prélevé sur le signal utile. Pour minimiser cet effet, l'impédance de charge R (figure 1) est réduite au minimum afin de réduire la tension secondaire et donc le courant magnétisant à fournir aux capteurs 10 placés en parallèle. C'est l'une des raisons pour lesquelles on a choisi une matrice rectangulaire de préférence à une matrice carrée.

Afin de réduire autant que possible le volume du câblage reliant le boîtier d'interconnexions 34 au circuit électronique de traitement qui peut être implanté comme on le verra ultérieurement hors du bâtiment réacteur dans l'application décrite, il est proposé de disposer des circuits de multiplexage à l'intérieur du boîtier 34. Ainsi, on voit sur la figure 3 un circuit d'alimentation 36 permettant d'exciter à tour de rôle l'enroulement primaire 14 des capteurs 10 de chacune des n lignes de la matrice, et un circuit de lecture 38 permettant de balayer à tour de rôle les enroulements secondaires 16 des capteurs de chacune des p colonnes de la matrice.

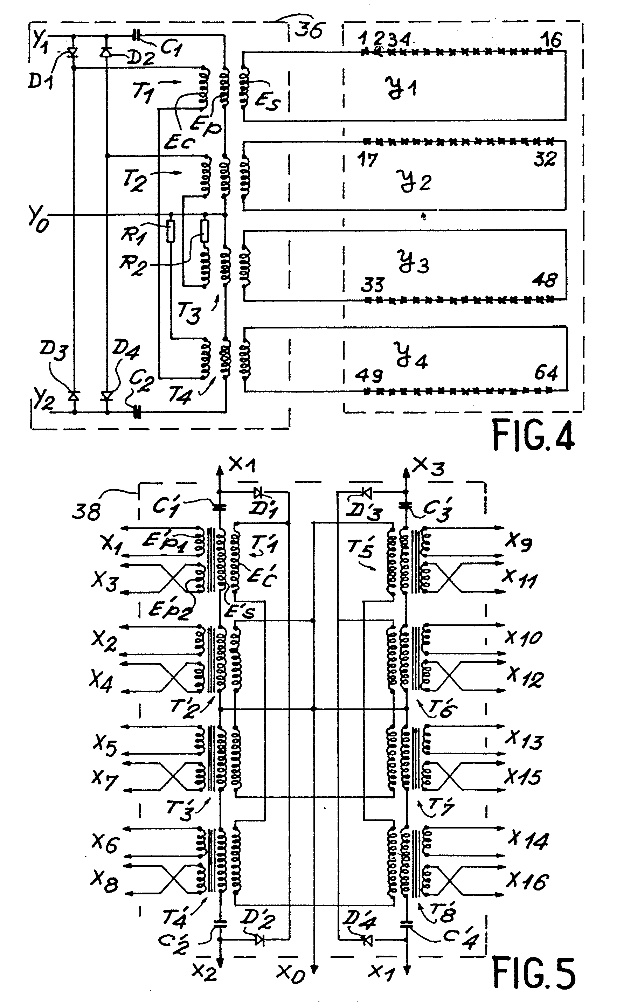

On a représenté sur la figure 4 un mode de réalisation préféré du circuit d'alimentation 36. On comprendra que ce circuit peut être remplacé par tout circuit de multiplexage connu sans sortir du cadre de l'invention.

Ce circuit 36 comprend n transformateurs T (4 dans le mode de réalisation représenté, désignés par les références $T_1$ à $T_4$), un transformateur étant associé à chacune des n lignes ($y_1$ à $y_4$) de la matrice de capteurs.

Chacun des transformateurs T comprend trois enroulements identiques désignés par les références $E_c$, $E_p$ et $E_s$, bobinés sur un tore magnétique (non représenté). Ces enroulements constituent respectivement un enroulement de commande $E_c$, un enroulement primaire $E_p$ et un enroulement secondaire $E_s$.

L'enroulement secondaire $E_s$ de chaque transformateur est monté en série avec les enroulements d'excitation 14 de la ligne de capteurs qui lui correspond.

Les enroulements primaires $E_p$ des transformateurs sont reliés deux à deux en série, par exemple selon l'ordre des lignes de la matrice (les enroulements primaires de $T_1$ et $T_2$ d'une part, et de $T_3$ et $T_4$ d'autre part étant reliés en série).

Enfin, les enroulements de commande $E_c$ sont également reliés deux par deux en série, mais selon des groupements différents de ceux des enroulements primaires $E_p$. Par exemple, dans le cas de la figure 4, les enroulements de commande de $T_1$ et de $T_4$ d'une part de $T_2$ et $T_3$ d'autre part sont reliés en série.

Le circuit d'alimentation 36 comprend de plus $\frac{n}{2}$ lignes d'alimentation (2 dans le mode de réalisation décrit, repérées $Y_1$ et $Y_2$) dans lesquelles circule le courant d'excitation provenant du circuit de traitement. Chacune des lignes $Y_1$, $Y_2$ alimente respectivement les enroulements primaires $E_p$ des transformateurs $T_1$ et $T_2$ au travers d'un condensateur $C_1$ et les enroulements primaires

des transformateurs $T_3$ et $T_4$ au travers d'un condensateur $C_2$, une autre ligne $Y_0$ permettant de fermer le circuit électrique.

Par ailleurs, les lignes $Y_1$ et $Y_2$ alimentent les enroulements de commande $E_c$ des transformateurs $T_1$ et $T_4$ au travers de deux diodes $D_1$ et $D_3$, respectivement, passantes depuis les lignes $Y_1$ et $Y_2$ vers la ligne $Y_0$.

De façon comparable, les lignes $Y_1$ et $Y_2$ alimentent les enroulements de commande $E_c$ des transformateurs $T_2$ et $T_3$ au travers de deux diodes $D_2$ et $D_4$, respectivement passantes depuis la ligne $Y_0$ vers les lignes $Y_1$ et $Y_2$.

Enfin, des résistances $R_1$ et $R_2$ sont placées en série respectivement avec les enroulements de commande $E_c$ des transformateurs $T_1$ et $T_4$, d'une part, et $T_2$ et $T_3$, d'autre part.

Grâce au circuit d'alimentation 36 qui vient d'être décrit en se référant à la figure 4, on comprend qu'il est possible d'aiguiller à la demande le courant d'excitation délivré par le circuit de traitement, successivement vers les n lignes $y_1$ à $y_4$.

Ainsi, lorsqu'on désire exciter l'une des lignes $y_1$ ou $y_2$, il suffit d'injecter en $Y_1$ un courant alternatif dont la composante continue est bloquée par le condensateur $C_1$ avant de parcourir les enroulements primaires $E_p$ des transformateurs correspondants $T_1$ et $T_2$. Afin d'exciter seulement l'une des lignes $y_1$ ou $y_2$, on interdit simultanément l'injection de courant dans celle des deux lignes que l'on ne désire pas exciter, en court-circuitant le transformateur correspondant $T_1$ ou $T_2$.

A cet effet, l'enroulement de commande $E_c$ de ce transformateur reçoit un courant continu émis de $Y_2$ vers $Y_0$ à travers la diode $D_3$ qui sature le transformateur $T_1$, si la polarité du courant est positive, ou à travers la diode $D_4$ qui sature le transformateur $T_2$, si elle est négative. Le même courant sature aussi l'un des deux transformateurs $T_3$, $T_4$ associés aux deux autres lignes $y_3$, $y_4$ mais sans action puisque la ligne $y_2$ ne comporte pas de composante alternative dans cette partie de la séquence.

La sélection des lignes $y_3$ et $y_4$ s'effectue sur le même principe, mais les rôles de $Y_1$ et $Y_2$ sont inversés, le courant alternatif étant injecté par $Y_2$ et la composante continue par $Y_1$.

Le tableau I ci-dessous définit la séquence de sélection des lignes $y_1$ à $y_4$, en prenant pour exemple le cas où l'intensité du courant injecté en $Y_1$ et $Y_2$ est de 100 mA.

### Tableau I

| Ligne | $Y_1$ (mA) | | $Y_2$ (mA) | |
|---|---|---|---|---|
| | I | Icc | I | Icc |
| y1 | 100 | 0 | 0 | −100 |
| y2 | 100 | 0 | 0 | +100 |
| y3 | 0 | +100 | 100 | 0 |
| y4 | 0 | −100 | 100 | 0 |

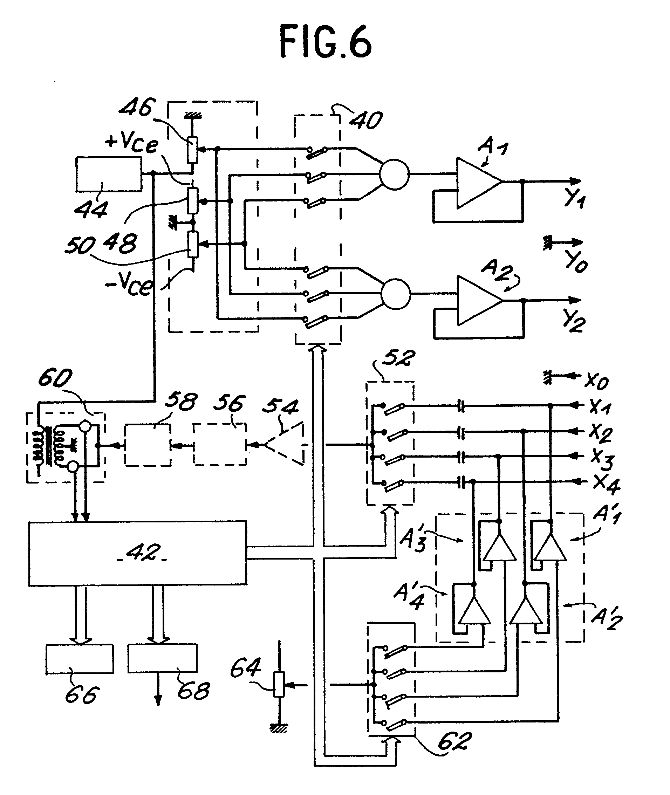

On décrira maintenant en se référant à la figure 5 un exemple de réalisation du circuit de lecture 38. On comprendra que, comme le circuit 36, ce circuit peut être remplacé par tout circuit de multiplexage connu sans sortir du cadre de l'invention.

Ce circuit 38 comprend $\frac{p}{2}$ transformateurs T' (8 dans le mode de réalisation représenté, désignés par les références $T'_1$ à $T'_8$), un transformateur étant associé simultanément à deux colonnes non consécutives ($x_1$ et $x_3$; $x_2$ et $x_4$; ... $x_{14}$ et $x_{16}$) de la matrice de capteurs.

Chacun des transformateurs T' comprend deux enroulements primaires $E'_{pl}$ et $E'_{p2}$, un enroulement secondaire $E'_s$ et un enroulement de commande $E'_c$, bobinés sur un tore magnétique.

Les enroulements primaires $E'_{p1}$ et $E'_{p2}$ d'un même transformateur T' sont connectés aux enroulements de lecture 16 (montés en parallèle) des deux colonnes de capteurs correspondant à ce transformateur. Cette connexion est réalisée en sens inverse, de telle sorte que le courant pouvant circuler dans l'enroulement primaire $E'_{p1}$ soit inverse de celui qui peut circuler dans l'enroulement $E'_{p2}$.

Les enroulements secondaires $E'_s$ des transformateurs T' sont reliés deux à deux en série. Par exemple, dans la variante représentée sur la figure 5, les enroulements secondaires des transformateurs successifs $T'_1$ et $T'_2$, $T'_3$ et $T'_4$, $T'_5$ et $T'_6$, $T'_7$ et $T'_8$ sont reliés en série.

Enfin, les enroulements de commande $E'_c$ des transformateurs T' sont reliés en série pour former deux groupes de $\frac{p}{4}$ enroulements $E'_c$ (soit 4 enroulements dans la variante décrite), chaque groupe comprenant un enroulement pris dans chaque paire de transformateurs dont les enroulements secondaires $E'_s$ sont reliés en série. Dans la variante représentée, les enroulements de commande $E'_c$ des transformateurs $T'_1$, $T'_4$, $T'_8$ et $T'_5$ d'une part, et les enroulements de commande des transformateurs $T'_6$, $T'_7$, $T'_3$ et $T'_2$ d'autre part sont reliés en série.

Le circuit de lecture 38 comprend de plus $\frac{p}{4}$ lignes d'alimentation et de lecture X (4 dans la variante représentée, désignées par les références $X_1$ à $X_4$) et une ligne commune $X_0$ permettant de fermer le circuit électrique. Chacune des lignes $X_1$ à $X_4$ relie le circuit 38 au circuit de traitement et peut servir alternativement à l'injection d'un courant dans les enroulements de commande $E'_c$ et à la transmission au circuit de traitement du courant circulant dans les enroulements secondaires $E'_s$.

Chacune des lignes $X_1$ à $X_4$ est reliée respectivement à chaque paire d'enroulements secondaires $E'_s$ reliés en série au travers d'un condensateur $C'_1$ à $C'_4$ servant à bloquer la composante continue du signal.

Les lignes $X_1$ et $X_2$ d'une part et les lignes $X_3$ et $X_4$ d'autre part sont reliées respectivement aux groupes d'enroulements de commande $E'_c$ des transformateurs $T'_1$, $T'_4$, $T'_8$ et $T'_5$ d'une part, $T'_6$, $T'_7$, $T'_3$ et $T'_2$ d'autre part, au travers de diodes $D'_1$ à $D'_4$ passantes vers la ligne de sortie Xo.

Grâce au circuit de lecture 38 qui vient d'être décrit en se référant à la figure 5, on comprend qu'il est possible d'assurer le multiplexage des signaux recueillis à la base des colonnes de la matrice de capteurs.

En effet, ce circuit permet tout d'abord de faire la différence vectorielle des signaux issus de deux colonnes non consécutives, grâce au montage décrit précédemment des enroulements primaires $E'_{p1}$ et $E'_{p2}$ de chaque transformateur T'. Grâce à cette caractéristique, on obtient un signal porteur de deux informations: l'amplitude, indiquant l'état de saturation d'un capteur dans l'une ou l'autre des deux colonnes considérées et le déphasage par rapport au courant d'excitation, qui permet de déterminer à quelle colonne appartient ce capteur.

De plus, ce circuit de lecture 38 permet, comme le circuit d'alimentation 36 décrit précédemment en se référant à la figure 4, de réduire le nombre de conducteurs nécessaires pour véhiculer les signaux délivrés par les transformateurs $T'_1$ à $T'_8$, grâce au montage particulier des enroulements secondaires $E'_s$ et des enroulements de commande $E'_c$.

Afin d'illustrer le fonctionnement du circuit de lecture 38 mettant en œuvre le premier de ces principes, on décrira maintenant quelques exemples en se référant aux figures 3 et 5.

Supposons que l'index magnétique 22 (figure 2a) soit centré sur le magnétomètre n° 3. Celui-ci est alors saturé. Lorsque la ligne $Y_1$ est excitée, le courant $IE'_{p2}$ dans l'enroulement $E'_{p2}$ du transformateur $T'_1$ est donc nul. En revanche, le courant $IE'_{p1}$ issu du magnétomètre n° 1 est nominal. En effet, ce magnétomètre n° 1 n'est pas saturé car les lignes de force de l'aimant ne peuvent, par construction, saturer plus de trois capteurs consécutifs. Sur l'enroulement secondaire Es du transformateur $T'_1$, on recueille alors un courant $IEs = K (IEp1 – IEp2) = KIEp1$, puisque IEp2 est nul et ce signal est en phase avec le courant d'excitation IY1 de la ligne Y1.

Considérons maintenant les deux capteurs voisins n° 2 et n° 4. Si ces capteurs sont non saturés, ils débitent tous deux dans les enroulements $E'_{p1}$ et $E'_{p2}$ du transformateur $T'_2$ et, en vertu de la relation précédente, le courant IEs de ce transformateur est nul. Si ces deux capteurs sont saturés (possibilité à envisager compte tenu du jeu de la tige de commande), le résultat est le même que précédemment car les deux courants primaires du transformateur $T'_2$ sont nuls. On identifie bien dans ces deux cas la saturation du capteur n° 3 sans ambiguïté.

Le cas suivant suppose l'index magnétique 22 dans une position intermédiaire, par exemple entre les capteurs n° 3 et n° 4. Ces capteurs sont alors saturés. L'enroulement E's du transformateur $T'_1$ délivre donc un courant -KIEp2, en opposition de phase avec $IY_1$ et l'enroulement E's du transformateur $T'_2$ délivre un courant KIEp1 en phase avec $IY_1$. L'analyse de ces deux signaux permet l'identification des deux capteurs saturés et leur contiguïté peut être interprétée comme la position médiane de l'index entre ces deux capteurs.

Cette analyse ne vaut qu'à l'intérieur des groupes de 4 colonnes imbriquées x1 à x4, x5 à x8, x9 à x12, x3 à x16) car l'opposition deux à deux des colonnes i et i+2 conduit à une périodicité de 4 et à un comportement différent, aux frontières de ces groupes, de celui analysé ci-dessus.

Cette différence porte seulement sur un cas, celui où trois capteurs sont saturés simultanément. Nous avons vu précédemment dans le cas des capteurs n° 2, 3, 4 que seul le tore n° 3 était détecté. Si l'on prend ce triplet à cheval sur une frontière entre deux groupes de quatre, par exemple les capteurs 3, 4 et 5, aucun de ceux-ci ne se trouve opposé à l'autre et chacun sera détecté comme étant saturé; le capteur n° 3 par le transformateur T'1, le capteur n° 4 par le transformateur T'2 et le capteur n° 5 par le transformateur T'3. Cette différence de comportement est aisément compensée, car l'algorithme de traitement peut facilement lever cette ambiguïté en désignant le capteur médian comme position probable de l'index magnétique 22. Pour éviter ces particularités, on peut notamment utiliser une imbrication de type i + 8 au lieu de i + 2, la périodicité correspondant alors à la longueur d'une ligne de la matrice de capteurs.

Le deuxième principe mis en œuvre par le circuit de lecture 38 permet, comme on l'a mentionné précédemment, de véhiculer les signaux délivrés par les transformateurs T'1 à T'8 au moyen d'un nombre de conducteurs réduit, et de véhiculer un courant continu permettant de saturer l'un des deux transformateurs dont les enroulements secondaires $E'_s$ sont montés en série, de façon à définir à quelle colonne appartient le signal émis.

Cet aspect du fonctionnement du circuit de lecture 38 correspondant à celui qui a été décrit en détails pour le circuit d'alimentation 36, il ne sera pas décrit ici en détails.

La séquence de sélection colonne par colonne est donnée à titre d'exemple dans le tableau II suivant. Le signal de commande Icc pourra notamment être de 20 mA.

Tableau II

| Colonne | Ligne de mesure | Phase du signal de mesure Is par rapport au signal primaire Ip | Ligne d'injection du signal de saturation Ic.c. | Lignes non utilisées |
|---------|-----------------|----------------------------------------------------------------|------------------------------------------------|----------------------|
| x1 | X1 | 0° | X4 | X2,X3 |
| x2 | X1 | 0° | X2 | X3,X4 |
| x3 | X1 | 180° | X4 | X2,X3 |
| x4 | X1 | 180° | X2 | X3,X4 |

Tableau II (suite)

| Colonne | Ligne de mesure | Phase du signal de mesure Is par rapport au signal primaire Ip | Ligne d'injection du signal de saturation Ic.c. | Lignes non utilisées |
|---|---|---|---|---|
| x5 | X2 | 0° | X1 | X3,X4 |
| x6 | X2 | 0° | X3 | X1,X4 |
| x7 | X2 | 180° | X1 | X3,X4 |
| x8 | X2 | 180° | X3 | X1,X4 |
| x9 | X3 | 0° | X4 | X1,X2 |
| x10 | X3 | 0° | X1 | X2,X4 |
| x11 | X3 | 180° | X4 | X1,X2 |
| x12 | X3 | 180° | X1 | X2,X4 |
| x13 | X4 | 0° | X2 | X1,X3 |
| x14 | X4 | 0° | X3 | X1,X2 |
| x15 | X4 | 180° | X2 | X1,X3 |
| x16 | X4 | 180° | X3 | X1,X2 |

On remarquera à la lecture de ce tableau que le système n'est pas optimisé car toutes les possibilités n'ont pas été utilisées. En particulier, le mode unipolaire du courant de saturation peut être remplacé par un mode bipolaire permettant de doubler le nombre de configurations. Ceci permet notamment de doubler le nombre de colonnes sans pour autant changer le nombre de conducteurs, en utilisant seize transformateurs regroupés en 4 séries de 4.

Les circuits d'alimentation 36 et de lecture 38 qui viennent d'être décrits travaillent en courant sur des circuits à basse impédance, ce qui permet de véhiculer les signaux sur d'assez grandes longueurs sans précautions particulières. Dans l'application à la mesure du déplacement d'une tige portant un élément absorbant devant être introduit dans le cœur d'un réacteur nucléaire, cette tolérance vis-à-vis des distances permet d'implanter le circuit de traitement hors du bâtiment réacteur.

L'organigramme de ce circuit de traitement va maintenant être décrit en se référant à la figure 6. Ce circuit ne met en œuvre que des composants classiques, de sorte que seul l'aspect fonctionnel sera évoqué.

Les circuits de sélection de ligne Y1 et Y2 sont commandés par deux amplificateurs de puissance A1 et A2 montés en générateur de courant, la bande passante allant par exemple du continu à 100 kHz. La consigne de courant appliquée à ces amplificateurs est sélectionnée par un multiplexeur 40 dont l'adressage est piloté par une logique de commande 42 à microprocesseur suivant l'algorithme indiqué précédemment sur le tableau I. Les grandeurs de consigne introduites dans le multiplexeur 40 sont soit un signal alternatif I issu d'un oscillateur sinusoïdal 44 soit des tensions continues Icc + Icc-, positives ou négatives. Des potentiomètres 46, 48 et 50 permettent de régler ces trois termes.

Les circuits de lecture X1 à X4 sont successivement sélectionnés par un multiplexeur 52 piloté par la logique de commande 42. Le signal ainsi choisi est amplifié en 54, filtré en 56 et comparé en 58 à un seuil affecté d'une hystérésis. La sortie du seuil est, après mise en forme, comparée en 60 au signal de référence I créant le courant ligne. Les signaux logiques issus de cette comparaison de phase sont traités ensuite par la logique de commande 42.

Sur chacune des liaisons X1 à X4 un amplificateur A'1 à A'4 fonctionnant en générateur de courant permet d'injecter la composante continue (par exemple 20 mA) utilisée pour saturer les transformateurs de lecture. Un multiplexeur 62 oriente la consigne de courant continu 64 vers l'amplificateur concerné. Les multiplexeurs 52 et 62 sont pilotés par la logique de commande 42 suivant l'algorithme donné précédemment sur le tableau II.

La logique de commande 42 contrôle par ailleurs un système d'affichage 66 et un convertisseur 68 ayant pour fonction de fournir un signal analogique représentatif de la cote mesurée.

La logique de commande 42 est gérée par un microprocesseur qui assume les tâches suivantes:

En mode automatique
Elaboration des séquences de sélection de ligne et de colonne.
Contrôle de l'état de tous les capteurs.
Détermination de la position de l'index magnétique (choix de la médiane lorsque deux ou trois capteurs contigus sont excités).
Elaboration de la cote, en pas ou mm.
Détection d'anomalies.
En mode manuel
Gestion d'un programme de test en pas à pas, avec affichage de l'état du détecteur sélectionné.

En mode automatique, un cycle complet de scrutation peut s'effectuer en moins de 100 ms.

Une maquette correspondant à la variante décrite a permis de vérifier le bon fonctionnement du dispositif selon l'invention. Une précision de ± un pas (16 mm) a ainsi pu être obtenue.

Bien entendu, l'invention n'est pas limitée à cette variante de réalisation et peut subir différentes adaptations aussi bien en ce qui concerne la nature des capteurs qu'en ce qui concerne leur nombre, l'allure de la matrice d'interconnexion de ces capteurs, et celle des circuits de multiplexage.

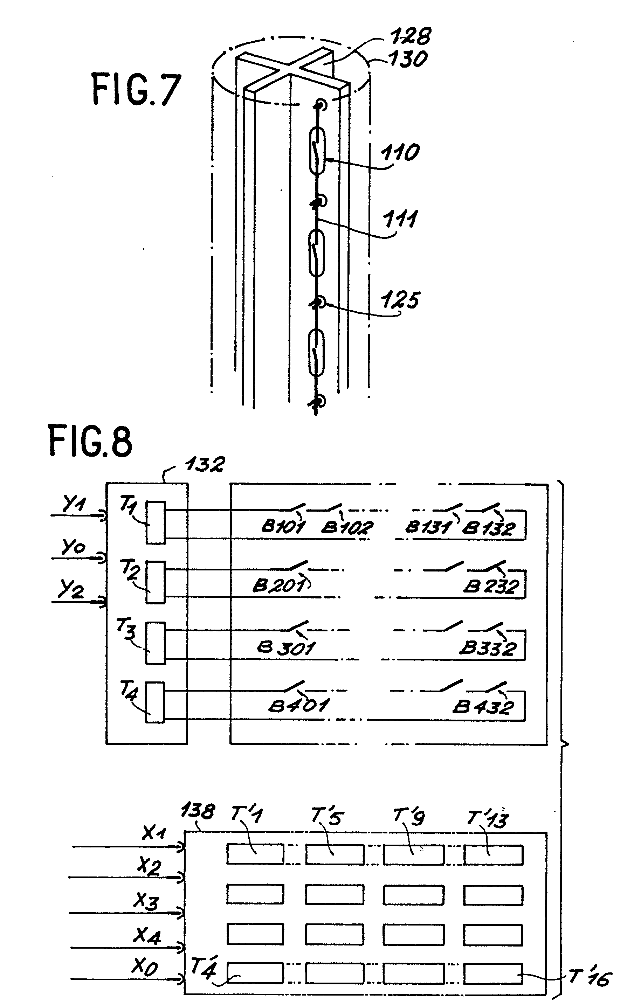

Ainsi, dans une deuxième variante de réalisation représentée sur les figures 7 à 10, les capteurs magnétomètres sont remplacés par des interrupteurs à lames souples sous ampoule scellée 110 (en abrégé, ILS).

Les ILS 110 sont disposés selon une rangée et connectés électriquement en série par des fils de liaison 111, comme l'illustre la figure 7. Les ILS et les fils sont montés sur un support 128 constitué par un profilé cruciforme, par l'intermédiaire de plots de raccordement 125 électriquement isolés. Comme dans la précédente variante, l'ensemble est logé dans un tube 130, par exemple de 21 mm de diamètre. En revanche, les pièces magnétiques qui shuntaient l'entrefer ne sont pas nécessaires car cette fonction est remplie par les fils de sortie des ILS qui sont en matériaux magnétiques.

Comme dans la variante précédente, plusieurs dispositifs tels que celui qui est représenté sur la figure 7 peuvent être disposés autour du tube guide dans lequel se déplace la barre absorbante, lorsque l'invention est appliquée à la détection de la position de celle-ci. Une mesure redondante peut ainsi être effectuée.

L'interconnection électrique des ILS 110 est également réalisée de telle sorte que ceux-ci soient groupés électriquement sous la forme d'une matrice, comme l'illustre la figure 8. Ainsi, on a représenté à titre d'exemple sur cette figure le cas d'un dispositif comprenant 128 détecteurs 110, géométriquement alignés et groupés électriquement pour former une matrice de 4 lignes et 32 colonnes. Sur la figure 8, les détecteurs sont désignés par la lettre B affectée d'un indice à 3 chiffres, le premier chiffre donnant le numéro de la ligne et les deux autres le numéro de la colonne. L'implantation mécanique des ILS respecte l'ordre croissant des numéros de la matrice, l'origine étant le haut du détecteur.

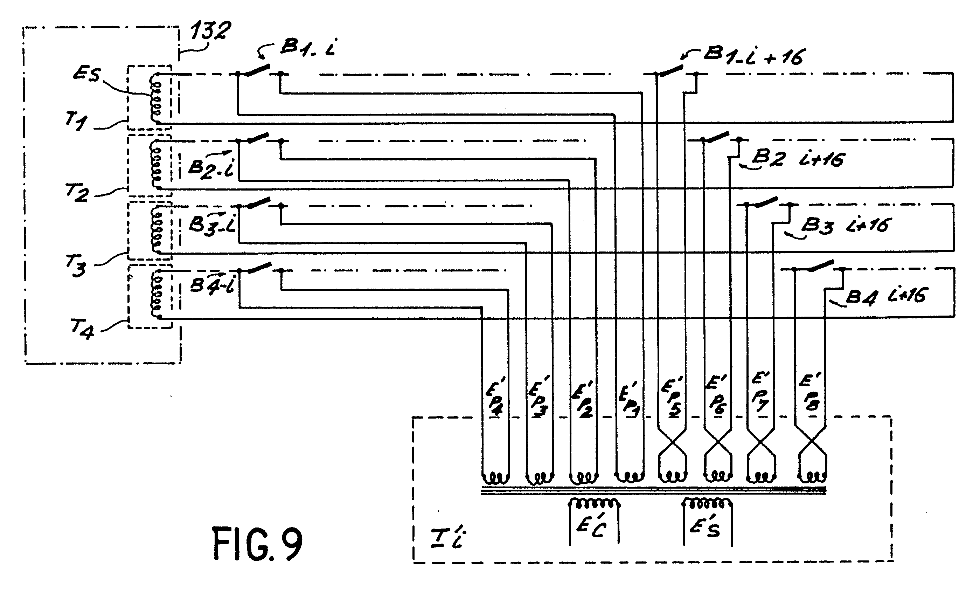

Les 32 détecteurs de chaque ligne sont connectés en série à l'enroulement secondaire $E_S$ d'un transformateur correspondant $T_1$ à $T_4$ pour les lignes 1 à 4 (figure 9). Les transformateurs $T_1$ à $T_4$ font partie du circuit de multiplexage ligne 136 dont la structure et le fonctionnement sont identiques à ceux du circuit 36 décrit précédemment en se référant à la figure 4. Il en est de même des moyens de commande du circuit 136, qui sont identiques à ceux qui ont été décrits précédemment en se référant à la figure 6.

Comme l'illustre la figure 9, le circuit électrique d'alimentation de chacune des lignes de la matrice de capteurs est fermé par les enroulements primaires $E'_{p1}$ à $E'_{p8}$ des transformateurs $T'_1$ à $T_{16}$ du circuit de multiplexage colonne 138, chacun de ces enroulements primaires étant connecté en parallèle sur l'un des capteurs 110. Pour simplifier, les fils de liaison entre les capteurs et les transformateurs du circuit 138 n'ont pas été représentés sur la figure 8.

De façon plus précise, le circuit 138 comprend un nombre de transformateurs $T'_1$ à $T'_{16}$ (16 dans la variante décrite) égal à la moitié du nombre de colonnes de la matrice de capteurs. De plus, chaque transformateur comprend un nombre d'enroulements primaires $E'_{p1}$ à $E'_{p8}$ (8 dans la variante décrite) égal au double du nombre de lignes de la matrice. Ainsi, le nombre cumulé des enroulements primaires est égal au nombre de capteurs de la matrice.

Comme on le voit sur la figure 9 pour l'un quelconque, $T'_i$, des transformateurs $T'_1$ à $T'_{16}$, les enroulements primaires $E'_{p1}$ à $E'_{p4}$ de ce transformateur $T'_i$ sont montés en parallèle sur les interrupteurs $B_{1i}$ à $B_{4i}$, c'est-à-dire sur les interrupteurs de la colonne i, et les enroulements primaires $E'_{p5}$ à $E'_{p8}$ de ce même transformateur $T'_i$ sont montés en parallèle sur les interrupteurs $B_{1i+16}$ à $B_{4-i+16}$ de la colonne i+16. De plus, les enroulements $E'_{p1}$ et $E'_{p5}$, $E'_{p2}$ et $E'_{p6}$, $E'_{p3}$ et $E'_{p7}$ et $E'_{p4}$ et $E'_{p8}$ sont montés respectivement en opposition de phase.

Compte tenu des caractéristiques de l'index magnétique lié à l'organe mobile dont on souhaite mesurer la position (c'est-à-dire une barre absorbante d'un réacteur nucléaire dans l'exemple choisi), les différentes parties du dispositif sont bien entendu dimensionnées pour qu'il y ait toujours au moins un ILS fermé, quelle que soit la position de l'organe mobile. De plus, le nombre de colonnes de la matrice est choisi de façon à être au moins égal au double du nombre maximum d'ILS consécutifs pouvant être fermés simultanément (ce nombre d'ILS est de 15 dans la variante décrite).

Compte tenu de ces hypothèses, le fonctionnement du système qui vient d'être décrit en se référant aux figures 8 et 9 est le suivant, si l'on prend pour exemple les capteurs $B_{1-i}$ et $B_{1-i+16}$ de la première ligne de capteurs, et le transformateur $T'_i$ qui leur est associé.

Lorsque la première ligne est sélectionnée par le circuit 132, le courant d'excitation traverse les enroulements primaires $E'_{p1}$ et $E'_{p5}$ du transformateur $T'_i$, qui sont en opposition de phase.

Si les interrupteurs $B_{1-i}$ et $B_{1-i+16}$ sont ouverts, le flux résultant dans $T'_i$ est nul et le courant dans l'enroulement secondaire $E'_S$ de ce transformateur est donc nul.

Si $B_{1-i}$ est fermé et $B_{1-i+16}$ ouvert, le courant dans $E'_{p1}$ est pratiquement nul, alors qu'il est nominal dans l'enroulement $E'_{p5}$. La somme des ampères tours n'est donc plus nulle et un courant est engendré dans $E'_S$, en opposition de phase avec le courant alimentant la première ligne de capteurs.

Si, à l'inverse, $B_{1-i}$ est ouvert et $B_{1-i+16}$ fermé, le raisonnement est le même, mais le courant engendré dans $E'_S$ est en phase avec le courant alimentant la première ligne.

Lorsque la ligne suivante est sélectionnée, par exemple la ligne 2, ce sont les enroulements $E'_{p2}$ et $E'_{p6}$ qui entrent en action suivant le même processus, et ainsi de suite par les autres lignes.

On obtient ainsi un signal de même nature que celui qui est obtenu dans la variante décrite précédemment en se référant aux figures 3 à 6.

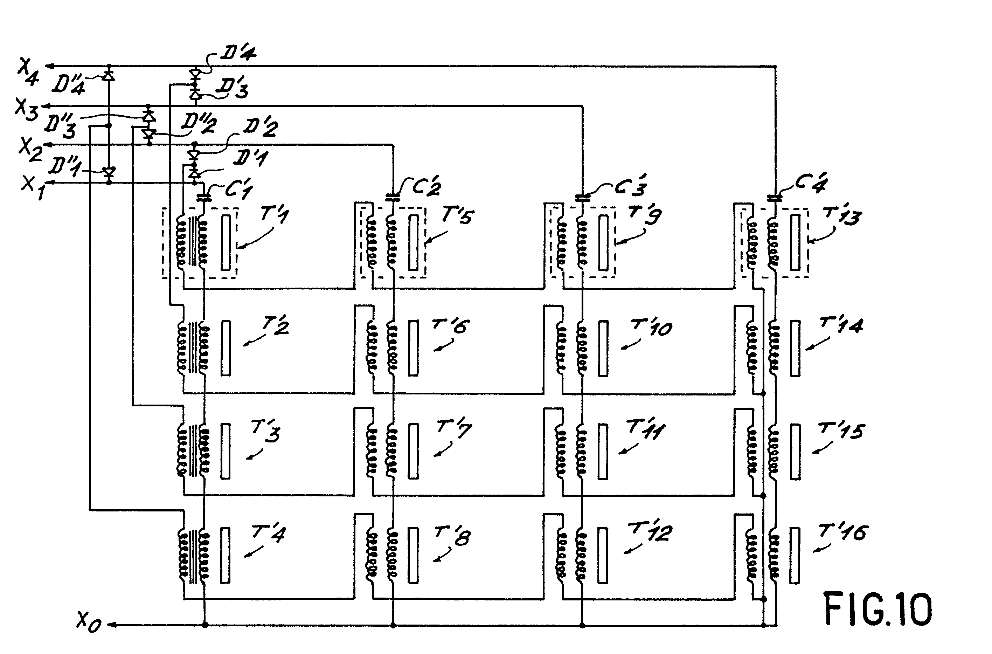

Comme dans la première variante et comme l'illustrent les figures 9 et 10, chacun des transformateurs $T'_1$ à $T_{16}$ comprend, en plus des enroulements primaires $E'_{p1}$ à $E'_{p8}$ déjà mentionnés et de l'enroulement secondaire $E'_S$, un enroulement de commande $E'c$ permettant l'injection d'un courant continu qui, par saturation du noyau magnétique, permet d'annuler à volonté le signal éventuellement présent sur $E'_S$.

La figure 10 montre que les enroulements $E'c$ et $E'_S$ des transformateurs $T'_1$ à $T'_{16}$ sont groupés du point de vue électrique sous la forme d'une matrice de 4 lignes et de 4 colonnes. Dans cette matrice, les enroulements $E'_S$ sont couplés en série suivant les 4 colonnes et les enroulements $E'c$ sont couplés en série suivant les 4 lignes.

Comme dans la variante précédente décrite en se référant à la figure 5, 4 lignes d'alimentation et de lecture X1 à X4 et une ligne commune X0 relient ces transformateurs à un circuit de commande identique au circuit décrit en se référant à la figure 6. Ainsi, les enroulements $E'_S$, de chaque colonne de la matrice de transformateurs $T'_1$ à $T'_{16}$ sont reliés à l'une des lignes X1 à X4 par l'intermédiaire d'un condensateur $C'_1$ à $C'_4$, le circuit étant refermé sur la ligne X0. De même, les enroulements $E'c$ de chaque ligne de la matrice sont reliés à deux des lignes respectivement X1X2, X3X4, X2X3 et X1X4, au travers de diodes $D'1D'_2$, $D'3D'_4$, $D''2D''_3$ et $D''1D''_4$ passantes vers la ligne de sortie X0.

Grâce à cette disposition, on regroupe sur chacune des lignes X1 à X4 les signaux relatifs à 8 colonnes de la matrice d'ILS. La sélection de deux de ces 8 colonnes, c'est-à-dire de l'un seulement des transformateurs, s'obtient en injectant une composante continue saturant les transformateurs dont le signal est indésirable. L'algorithme de sélection est identique à celui qui a été indiqué précédemment à propos de la première variante de réalisation.

En pratique, chacun des enroulements primaires des transformateurs $T'1$ à $T16$ ne comporte qu'une spire réalisée avantageusement au moyen de cavaliers venant brider sur le circuit imprimé le tore sur lequel sont effectivement bobinés les enroulements $E'C$ et $E'S$.

On comprend à la lecture des deux modes de réalisation qui viennent d'être décrits que l'originalité de l'invention réside principalement dans le système de multiplexage, qui permet d'analyser isolément l'état de chacun des capteurs et donc d'éliminer les ambiguïtés pouvant résulter de la présence de plusieurs index magnétiques sur différentes parties de l'organe mobile, et notamment au sommet et à la base de celui-ci. De plus, ce système de multiplexage permet de réaliser la mesure au moyen d'un nombre pratiquement illimité de capteurs, ce qui n'est pas le cas notamment sur un dispositif fonctionnant en codage binaire au moyen de réseaux de résistance de type R-2R, dans lequel un codage sur plus de 7 ou 8 bits n'est pratiquement pas possible.

Il résulte de cette analyse que l'invention ne doit pas être limitée aux modes de réalisation spécifiquement décrits, mais au contraire généralisée à des circuits de multiplexage ligne et colonne regroupant respectivement n transformateurs et $\frac{p}{2}$ transformateurs, $n \cdot p$ capteurs étant regroupés électriquement en matrice de n lignes et p colonnes. Chaque transformateur comprend de préférence un enroulement secondaire et un enroulement de commande, ce dernier servant comme on l'a vu à saturer les transformateurs dont le signal est indésirable. Enfin, les transformateurs du circuit de multiplexage colonne sont groupés en matrice de k lignes et l colonnes du point de vue des connections électriques des enroulements secondaires et de commande. De même, les transformateurs du circuit de multiplexage ligne sont groupés en matrice de a lignes et b colonnes du point de vue des connections électriques des enroulements primaires et de commande.

## Revendications

1. Dispositif pour mesurer la position d'un organe mobile (18) selon une direction donnée par rapport à un organe fixe (20), comprenant un repère (22) générateur de flux magnétique porté par l'organe mobile (18) et au moins une rangée de capteurs (10, 110) changeant d'état sous l'effet dudit flux magnétique, ces capteurs (10, 110) étant disposés à intervalles réguliers sur l'organe fixe (20) selon ladite direction, de telle sorte qu'au moins un capteur (10, 110) change d'état sous l'effet du flux magnétique, caractérisé en ce que les capteurs (10, 110) d'une même rangée sont groupés électriquement selon une matrice de n lignes et p colonnes dont les n lignes sont alimentées à tour de rôle par des moyens d'alimentation (36, 136) et dont les p colonnes sont traitées à tour de rôle par des moyens de lecture (38, 138).

2. Dispositif selon la revendication 1, caractérisé en ce que les moyens d'alimentation (36, 136) comprennent n transformateurs ($T_1$ à $T_4$) comportant chacun un enroulement primaire ($E_p$) apte à être raccordé à une source de courant alternatif d'alimentation et un enroulement secondaire ($E_S$) connecté en série aux capteurs (10, 110) d'une même ligne.

3. Dispositif selon la revendication 2, caractérisé en ce que chacun des n transformateurs comprend de plus un enroulement de commande (Ec), les n transformateurs étant groupés électriquement selon une matrice de a lignes et b colonnes et les enroulements primaires (Ep) et les enroulements de commande (Ec) étant respectivement connectés en série ligne par ligne et colonne par colonne et pouvant être raccordés respectivement à ladite source de courant alternatif d'alimentation et à une source de courant continu de saturation.

4. Dispositif selon la revendication 3, caractérisé en ce que les moyens d'alimentation comprennent de plus a lignes d'alimentation ($Y_1$, $Y_2$), chacune de ces lignes d'alimentation étant connectée à une ligne d'enroulements primaires (Ep) au travers d'un condensateur ($C_1$, $C_2$) et à

une colonne d'enroulements de commande Ec au travers d'une diode (D₁ à D₄).

5. Dispositif selon l'une quelconque des revendications 1 à 4, caractérisé en ce que les moyens de lecture (38, 138) comprennent $\frac{p}{2}$ transformateurs (T'₁ à T'₈) comportant chacun au moins deux enroulements primaires (E'p₁, E'p₂) en opposition de phase connectés respectivement à deux capteurs (10, 110) non consécutifs d'une même ligne, et un enroulement secondaire (E'ₛ) apte à être raccordé à un circuit de mesure.

6. Dispositif selon la revendication 5, caractérisé en ce que chacun des $\frac{p}{2}$ transformateurs comprend de plus un enroulement de commande (E'c), les $\frac{p}{2}$ transformateurs étant groupés électriquement selon une matrice de k lignes et l colonnes, les enroulements secondaires (E's) d'une même ligne étant connectés en série et pouvant être raccordés à un circuit de mesure, et les enroulements de commande (E'c), d'une même colonne étant connectés en série et pouvant être raccordés à une source de courant continu de saturation.

7. Dispositif selon la revendication 5, caractérisé en ce que les moyens de lecture comprennent de plus k lignes de mesure (X1 à X4), chacune de ces lignes de mesure étant connectée à une ligne d'enroulements secondaires (E's) au travers d'un condensateur (C'1 à C'4) et à une colonne d'enroulements de commande au travers d'une diode (D'₁ à D'₄).

8. Dispositif selon l'une quelconque des revendications 1 à 7, caractérisé en ce que les capteurs sont des capteurs magnétomètres (10) comprenant un tore magnétique (12) à cycle d'hystérésis rectangulaire et deux enroulements (14, 16) bobinés sur ce tore (12) et constituant respectivement des éléments d'excitation et de lecture, les éléments d'excitation (14) des capteurs (10) d'une même ligne étant connectés en série et les éléments de lecture (16) des capteurs (10) d'une même colonne étant connectés en parallèle.

9. Dispositif selon la revendication 8, caractérisé en ce que les capteurs magnétomètres (10) sont fixés sur un support amagnétique (28) et séparés par des shunts magnétiques (26), les capteurs (10), le support (28) et les shunts (26) étant logés dans un tube amagnétique (30) disposé de l'autre côté de l'organe fixe (20) par rapport à l'organe mobile (19).

10. Dispositif selon l'une quelconque des revendications 5 à 7, caractérisé en ce que les capteurs sont des interrupteurs à lame (110), les interrupteurs d'une même ligne étant connectés en série, chacun des $\frac{p}{2}$ transformateurs comprenant 2 n enroulements primaires, chaque interrupteur (110) de deux colonnes non consécutives étant monté en parallèle sur un enroulement primaire différent de l'un des $\frac{p}{2}$ transformateurs, de telle sorte que les enroulements primaires connectés à deux interrupteurs (110) d'une même ligne soient en opposition de phase.

11. Dispositif selon la revendication 10, caractérisé en ce que les interrupteurs à lame (110) sont connectés électriquement par des conducteurs en matériau magnétique et fixés sur un support (128) par l'intermédiaire de plots de raccordement (125) électriquement isolants, les interrupteurs (110), les conducteurs, le support (128) et les plots (125) étant logés dans un tube amagnétique disposé de l'autre côté de l'organe fixe (20) par rapport à l'organe mobile (18).

12. Dispositif selon l'une quelconque des revendications précédentes, caractérisé en ce que plusieurs rangées de capteurs (10, 110) sont disposées sur l'organe fixe (20) autour de l'organe mobile (18), les capteurs (10, 110) de chaque rangée étant disposés au même niveau de façon à donner une mesure redondante de la position dudit organe mobile (18).

13. Dispositif selon l'une quelconque des revendications précédentes, caractérisé en ce que l'organe mobile (18) se déplace selon un pas incrémental donné et en ce que la distance entre deux capteurs magnétomètres consécutifs (10, 110) d'une même rangée est égale à deux fois ledit pas.

## Patentansprüche

1. Vorrichtung zum Messen der Lage eines beweglichen Teils (18) in bezug auf einen festen Teil (20) längs einer vorgegebenen Richtung, mit einer einen Magnetfluss erzeugenden, von dem beweglichen Teil (18) getragenen Markierung (22) und wenigstens einer Reihe von Fühlern (10, 110), die ihren Zustand unter der Wirkung des Magnetflusses ändern, wobei diese Fühler (10, 110) längs der genannten Richtung an dem festen Teil (20) mit gleichmässigen Abständen derart angeordnet sind, dass wenigstens ein Fühler (10, 110) den Zustand unter der Wirkung des Magnetflusses ändert, dadurch gekennzeichnet, dass die Fühler (10, 110) einer gleichen Reihe elektrisch gemäss einer Matrix mit n-Zeilen und p-Spalten gruppiert sind, bei der die n-Zeilen nacheinander durch Stromversorgungsmittel (36, 136) gespeist sind und deren p-Spalten nacheinander durch Lesemittel (38, 138) verarbeitet werden.

2. Vorrichtung nach Anspruch 1, dadurch gekennzeichnet, dass die Stromversorgungsmittel (36, 136) n-Transformatoren (T₁ bis T₄) umfassen, von denen jeder eine Primärwicklung (Eₚ), die mit einer Wechselstromversorgungsquelle verbunden werden kann, und eine Sekundärwicklung (Eₛ) aufweist, die in Reihe mit den Fühlern (10, 110) einer gleichen Zeile verbunden ist.

3. Vorrichtung nach Anspruch 2, dadurch gekennzeichnet, dass jeder der n-Transformatoren zusätzlich eine Steuerwicklung (Ec) aufweist, dass die n-Transformatoren elektrisch gemäss einer Matrix mit a-Zeilen und b-Spalten gruppiert sind, und dass die Primärwicklungen (Ep) bzw. die Steuerwicklungen (Ec) in Reihe Zeile um Zeile und Spalte um Spalte verbunden sind und mit der Wechselstromversorgungsquelle bzw. einer Gleichstromsättigungsquelle verbunden werden können.

4. Vorrichtung nach Anspruch 3, dadurch gekennzeichnet, dass die Stromversorgungsmittel ferner a-Speiseleitungen $(Y_1, Y_2)$ aufweisen und dass jede dieser Speiseleitungen mit einer Zeile von Primärwicklungen (Ep) über einen Kondensator $(C_1, C_2)$ und einer Spalte von Steuerwicklungen (Ec) über eine Diode ($D_1$ bis $D_4$) verbunden ist.

5. Vorrichtung nach einem der Ansprüche 1 bis 4, dadurch gekennzeichnet, dass die Lesemittel (38, 138) $\frac{p}{2}$ Transformatoren ($T'_1$ bis $T'_8$) umfassen, von denen jeder wenigstens zwei gegenphasige Primärwicklungen ($E'p_1$, $E'p_2$), die wechselseitig mit zwei nichtaufeinanderfolgenden Fühlern (10, 110) der gleichen Zeile verbunden sind, und eine Sekundärwicklung ($E'_s$) aufweist, die mit einem Messkreis verbunden werden kann.

6. Vorrichtung nach Anspruch 5, dadurch gekennzeichnet, dass jeder der $\frac{p}{2}$ Transformatoren zusätzlich eine Steuerwicklung ($E'c$) aufweist, dass die $\frac{p}{2}$ Transformatoren elektrisch entsprechend einer Matrix mit k-Zeilen und l-Spalten gruppiert sind, dass die Sekundärwicklungen ($E's$) einer gleichen Zeile in Reihe geschaltet sind und mit einer Messschaltung verbunden werden können, und dass die Steuerwicklungen ($E'c$) einer gleichen Spalte in Reihe geschaltet sind und mit einer Gleichstromsättigungsquelle verbunden werden können.

7. Vorrichtung nach Anspruch 5, dadurch gekennzeichnet, dass die Lesemittel ferner k-Messzeilen (X1 bis X4) aufweisen, wobei jede dieser Messzeilen mit einer Zeile von Sekundärwicklungen ($E's$) über einen Kondensator (C'1 bis C'4) und einer Spalte von Steuerwicklungen über eine Diode ($D'_1$ bis $D'_4$) verbunden ist.

8. Vorrichtung nach einem der Ansprüche 1 bis 7, dadurch gekennzeichnet, dass die Fühler Magnetometerfühler (10) sind, die einen Magnetkern (12) mit rechteckförmiger Hysteresis und zwei auf diesen Kern (12) gewickelte Wicklungen (14, 16) aufweisen, die Erregungselemente bzw. Leseelemente bilden, und dass die Erregungselemente (14) der Fühler (10) einer gleichen Zeile in Reihe und die Leseelemente (16) der Fühler (10) einer gleichen Spalte parallel verbunden sind.

9. Vorrichtung nach Anspruch 8, dadurch gekennzeichnet, dass die Magnetometerfühler (10) auf einem unmagnetischen Träger (28) befestigt und durch magnetische Abschirmungen (26) voneinander getrennt sind und dass die Fühler (10), der Träger (28) und die Abschirmungen (26) in einem nichtmagnetischen Rohr (30) untergebracht sind, welches auf der anderen Seite des festen Teils (20) in bezug auf das bewegliche Teil (18) angeordnet ist.

10. Vorrichtung nach einem der Ansprüche 5 bis 7, dadurch gekennzeichnet, dass die Fühler Schutzrohrkontakte (110) sind, dass die Kontakte einer gleichen Zeile in Reihe verbunden sind, dass jeder der $\frac{p}{2}$ Transformatoren 2 n Primärwicklungen aufweist, dass jeder Kontakt (110) von zwei nichtaufeinanderfolgenden Spalten parallel auf einer Primärwicklung, die von einem der $\frac{p}{2}$ Transformatoren unterschiedlich ist, angebracht ist derart, dass die mit zwei Kontakten (110) einer gleichen Zeile verbundenen Primärwicklungen gegenphasig sind.

11. Vorrichtung nach Anspruch 10, dadurch gekennzeichnet, dass die Schutzrohrkontakte (110) elektrisch über Leiter aus magnetischem Material verbunden und mittels elektrisch isolierender Verbindungsstifte (125) an dem Träger (128) befestigt sind, und dass die Kontakte (110), die Leiter, der Träger (128) und die Stifte (125) in einem nichtmagnetischen Rohr untergebracht sind, welches in bezug auf das bewegliche Teil (18) auf der anderen Seite des festen Teils (20) angeordnet ist.

12. Vorrichtung nach einem der vorhergehenden Ansprüche, dadurch gekennzeichnet, dass mehrere Reihen von Fühlern (10, 110) an dem festen Teil (20) um das bewegliche Teil (18) herum angeordnet sind, wobei die Fühler (10, 110) derselben Reihe auf der gleichen Höhe so angeordnet sind, dass sie eine redundante Messung der Lage des beweglichen Organs (18) liefern.

13. Vorrichtung nach einem der vorhergehenden Ansprüche, dadurch gekennzeichnet, dass sich das bewegliche Teil (18) mit einem vorgegebenen Schritt bewegt und dass der Abstand zwischen zwei aufeinanderfolgenden Magnetometerfühlern (10, 110) einer gleichen Reihe gleich dem Doppelten des Schrittes ist.

## Claims

1. Device for measuring the position of a moving member (18) in a given direction with reference to a fixed member (20), including a magnetic flux generating marker (22) carried by the moving member (18) and at least one row of sensors (10, 110) changing state under the effect of the said magnetic flux, these sensors (10, 110) being placed at regular intervals on the fixed member (20) along the said direction, in such a way that at least one sensor (10, 110) changes state under the effect of the magnetic flux, characterized in that the sensors (10, 110) in a same row are electrically grouped in a matrix of n lines and p columns, the n lines of which are powered in turn by power supply means (36, 136) and the p columns of which are processed in turn by reading means (38, 138).

2. Device according to Claim 1, characterized in that the power supply means (36, 136) include n transformers ($T_1$ to $T_4$) each comprising a primary winding ($E_p$) capable of being connected to an alternating current supply source and a secondary winding ($E_S$) connected in series to the sensors (10, 110) of a same line.

3. Device according to Claim 2, characterized in that each of the n transformers also includes a control winding (Ec), the n transformers being electrically grouped in a matrix of a lines and b columns and the primary windings (Ep) and the control windings (Ec) being connected in series line by line and column by column respectively and able to be connected to the said alternating current supply source and to a direct current saturation supply source, respectively.

4. Device according to Claim 3, characterized in that the power supply means also include a power supply lines ($Y_1$, $Y_2$), each of these supply lines being connected to a line of primary windings (Ep) through a condenser ($C_1$, $C_2$) and to a column of control windings (Ec) through a diode ($D_1$ to $D_4$).

5. Device according to any one of Claims 1 to 4, characterized in that the reading means (38, 138) include p/2 transformers ($T'_1$ to $T'_8$) each including at least two primary windings ($E'p_1$, $E'p_2$) in opposite phase respectively connected to two non-consecutive sensors (10, 110) of a same line, and a secondary winding ($E'_s$) capable of being connected to a measuring circuit.

6. Device according to Claim 5, characterized in that each of the p/2 transformers also include a control winding ($E'c$), the p/2 transformers being electrically grouped in a matrix of k lines and l columns, the secondary windings ($E's$) of a same line being connected in series and able to be connected to a measuring circuit, and the control windings ($E'c$) of a same column being connected in series and able to be connected to a direct current saturation supply source.

7. Device according to Claim 5, characterized in that the reading means also include k measuring lines (X1 to X4), each of these measuring lines being connected to a line of secondary windings ($E's$) through a condenser ($C'1$ to $C'4$) and to a column of control windings through a diode ($D'_1$ to $D'_4$).

8. Device according to any one of Claims 1 to 7, characterized in that the sensors are magnetometer sensors (10) including a magnetic core (12) with a rectangular hysteresis loop and two windings (14, 16) wound on this core (12) and forming energizing and reading elements respectively, the energizing elements (14) of the sensors (10) of a same line being connected in series and the reading elements (16) of the sensors (10) of a same column being connected in parallel.

9. Device according to Claim 8, characterized in that the magnetometer sensors (10) are fixed on a non-magnetic support (28) and separated by magnetic shunts (26), the sensors (10), the support (28) and the shunts (26) being housed in a non-magnetic tube (30) placed on the other side of the fixed member (20) with respect to the moving member (19).

10. Device according to any one of Claims 5 to 7, characterized in that the sensors are reed switches (110), the switches of a same line being connected in series, each of the p/2 transformers including 2 n primary windings, each switch (110) of two non-consecutive columns being connected in parallel with a different primary winding of one of the p/2 transformers, such that the primary windings connected to two switches (110) of a same line are in opposite phase.

11. Device according to Claim 10, characterized in that the reed switches (110) are electrically connected by conductors made from magnetic material and fixed to a support (128) by means of electrically insulating connecting studs (125), the switches (110), the conductors, the support (128) and the studs (125) being housed in a non-magnetic tube placed on the other side of the fixed member (20) with respect to the moving member (18).

12. Device according to any one of the preceding claims characterized in that several rows of sensors (10, 110) are placed on the fixed member (20) around the moving member (18), the sensors (10, 110) of each row being placed at the same level in order to give a redundant measurement of the position of the said moving member (18).

13. Device according to any one of the preceding claims, characterized in that the moving member (18) moves by a given incremental step and in that the distance between two consecutive magnetometer sensors (10, 110) of a same row is equal to twice the said step.

FIG.1a

FIG.1b

0 112 772

FIG.6

FIG.2a

FIG.2b

26

30

10

ⅡB

28

30
10

20

22
24

30

28

ⅡB

10

20
26

17

FIG.3

**FIG.4**

**FIG.5**

# FIG.6

0 112 772

## FIG.7

128
130
110
111
125

## FIG.8

132

Y1 → T1 — B101 B102 B131 B132
Y0 →
Y2 → T2 — B201 B232
T3 — B301 B332
T4 — B401 B432

138  T'1  T'5  T'9  T'13

X1 →
X2 →
X3 →
X4 →
X0 → T'4  T'16

25

FIG.9

FIG.10